# EUROPÄISCHE PATENTANMELDUNG

(11) **EP 1 464 713 A1**
(43) Veröffentlichungstag der Anmeldung: **06.10.2004**
(21) Anmeldenummer: 03007504.8
(22) Anmeldetag: 01.04.2003
(51) Int. Cl.: C22B 7/02, C22B 1/248, C10B 53/00

(54) **Verfahren und Anlage zur Verarbeitung von eisenhaltigen, ölkontaminierten Abfallstoffen**

(71) Anmelder: Kehrmann, Alexander, 46509 Xanten (DE)
(72) Erfinder: Kehrmann, Alexander, 46509 Xanten (DE)
(74) Vertreter: Ksoll, Peter, Dr.-Ing.

(57) **Zusammenfassung**

Die Erfindung betrifft ein Verfahren und eine Anlage zur Bearbeitung von eisenhaltigen, ölkontaminierten Abfallstoffen, insbesondere Walzenzunder und ähnlichen industriellen Abfallstoffen, wobei die Abfallstoffe durch eine Pyrolyse-Behandlung in einem Pyrolysereaktor dekontaminiert und organische Bestandteile entfernt werden. Die dekontaminierten Abfallstoffe werden anschließend in einer Brikettiereinrichtung agglomeriert. Die Pyrolyse-Behandlung erfolgt im Pyrolysereaktor bei indirekter Beheizung der Abfallstoffe mit einer Temperatur zwischen 450 °C und 550 °C unter Luftabschluss. Hier erfolgt eine Zersetzung von flüssigen und festen organischen Bestandteilen, insbesondere das enthaltene Öl wird ausgetrieben und mit dem Pyrolysegas abgesaugt.

## Beschreibung

Die Erfindung betrifft ein Verfahren und eine Anlage zur Verarbeitung von eisenhaltigen, ölkontaminierten Abfallstoffen, insbesondere Walzenzunder und ähnlichen industriellen Abfallstoffen.

Eisenhaltige, ölkontaminierte Abfallstoffe, wie insbesondere Walzenzunder aber auch eisenhaltige Schlämme und Stäube, fallen in großem Umfang in verschiedenartigen industriellen Prozessen an, beispielsweise in der Automobilindustrie oder generell bei Schleif-, Hon- und Läppvorgängen in metallverarbeitenden Betrieben.

In großem Umfang werden derartige Abfallstoffe deponiert. Dies ist jedoch, sowohl was die Rohstoffbilanz als auch die Deponiekapazität anbelangt, unvorteilhaft. Aus diesem Grunde ist man zunehmend bemüht, die Abfallstoffe wieder oder weiter zu verwerten. In diesem Zusammenhang zählt durch die DE 100 38 566 A1 ein Vorschlag zum Stand der Technik, der eine Verwertung von ölbelastetem Walzenzunder vorsieht durch Verkapselung und/oder Einbindung des Öls am Walzenzunder, so dass das Öl bei anschließendem Einsatz des Walzenzunders im Schachtofen oder Konverter erst in einer Temperaturzone ausgast, die am Zündpunkt bzw. oberhalb des Zündpunktes des austretenden Gases liegt und dort sofort verbrennt. Bei diesem Vorschlag verbleibt das Öl folglich bis einschließlich der Verwertung im Walzenzunder. Diese ist sicherheitstechnisch und gewerbehygienisch bedenklich.

Die DE 195 29 217 C1 beschreibt ein Verfahren zur Agglomerierung von ölhaltigem Walzzunderschlamm, bei dem dem Schlamm eine stark wasserbindende Polyacrylsäure zugemischt wird.

Im Umfang der EP 0 446 779 B1 wird ein Verfahren und eine Anlage zur Verwertung von ölhaltigem Walzenzunder und ähnlichen Stoffen erläutert, bei dem die Abfallstoffe in Verbindung mit einer Eisenerzsinteranlage behandelt und mittels dem Sinterkühler entnommener heißer Kühlerabluft getrocknet werden. Hierzu wird die Kühlerabluft in einem Durchlaufofen im Gegenstrom über die Abfallstoffe geleitet, wobei die Stoffe getrocknet werden und ein Teil des Öls verbrennt. Die mit Feuchtigkeit und flüchtigem Öl beladene Kühlerabluft wird dann in den Zündofen der Sinteranlage als warme Verbrennungsluft eingeführt, wobei im Zündofen das restliche Öl verbrennt. Generell ist die Verbrennung des Öls in der Sinteranlage sicherheitstechnisch bedenklich und birgt ein hohes Gefährdungspotential.

Bei dem aus der DE 41 01 584 A1 bekanntem Verfahren zur Aufbereitung von Walzenzunder für die Wiederverwertung in Stahlerzeugungsprozessen wird vorgeschlagen, dass der Walzenzunder nach Zugabe eines Bindemittels brikettiert wird und die Briketts der Stahlerzeugung wieder zugeführt werden. Eine Dekontaminierung des schadstoffbelasteten Walzenzunders ist bei diesem Verfahren nicht vorgesehen.

Der Erfindung liegt ausgehend vom Stand der Technik die Aufgabe zugrunde, ein betriebstechnisch sicheres und rationelles Verfahren und eine Anlage zur Verarbeitung von eisenhaltigen, ölkontaminierten Abfallstoffen, insbesondere Walzenzunder und ähnlichen industriellen Abfallstoffen zu schaffen, bei dem für die Weiterverarbeitung ein gut handhabbares und zumindest nahezu ölfreies Produkt bereitgestellt wird, welches hinsichtlich der Schadstoffbelastung unterhalb der gesetzlichen Grenznormen liegt.

Die Lösung des verfahrensmäßigen Teils der Aufgabe besteht in einem Verfahren gemäß Patentanspruch 1.

Danach ist vorgesehen, dass die Abfallstoffe durch eine Pyrolyse-Behandlung dekontaminiert werden, wobei organische Bestandteile, insbesondere Öl und auch Wasser, bis unterhalb schädlicher Grenzwerte entfernt werden. Anschließend werden die dekontaminierten Abfallstoffe brikettiert.

Vorteilhafte Ausgestaltungen und Weiterbildung des erfindungsgemäßen Verfahrens sind Gegenstand der abhängigen Ansprüche 2 bis 6.

Bei der Pyrolyse erfolgt eine Zersetzung von flüssigen und festen organischen Stoffen, insbesondere kohlenstoffhalter Stoffe, unter Ausschluss von Sauerstoff bei Temperaturen zwischen 450 °C und 550 °C. Die Pyrolysebehandlung der eisenhaltigen ölkontaminierten Abfallstoffe weist eine Reihe von Vorteilen auf, insbesondere sind die anfallenden Abgas- und auch Abwassermengen geringer. Der Prozess bei niedrigeren Temperaturen als beispielsweise eine Müllverbrennung durchgeführt werden, wobei auch insgesamt weniger Schadstoffe entstehen.

Das bei der Pyrolyse-Behandlung entstehende Gas kann im Prozess zur Energieerzeugung wieder verwertet werden.

Vorteilhafterweise erfolgt die Pyrolyse-Behandlung der Abfallstoffe unter Luftabschluss und indirekter Beheizung bei einer Temperatur zwischen 450 °C und 550 °C. Falls notwendig können die angelieferten Abfallstoffe vor der Pyrolyse-Behandlung homogenisiert und in einer Mischanlage durchmischt werden. Auch eine Vorentwässerung, beispielsweise in einem Sedimentationsbecken, ist im Rahmen der Erfindung möglich.

Der Feuchtigkeitsgehalt kann zudem in einer Trocknungsanlage, beispielsweise einem Rohrbündeltrockner oder auch einem Bandtrockner reduziert werden. Die Trocknung erfolgt erfindungsgemäß bei einer Temperatur zwischen 120 °C und 150°C. Nach dem Trocknungsvorgang weist der Abfallstoff eine Feuchtigkeit zwischen 10 % und 15 % auf. Grundsätzlich kann der Abfallstoff aber auch mit einem Feuchtigkeitsgehalt von maximal 40 % in den Pyrolyseprozess eingeschleust werden. Der Ölgehalt sollte bei der für die Praxis geplanten Anlage bei maximal 8 % liegen.

Nach der Pyrolyse-Behandlung ist der Abfallstoff dekontaminiert und das vorher vorhandene Öl und andere organische Bestandteile vollständig oder zumindest nahezu vollständig entfernt. Der dekontaminierte Abfallstoff wird dann brikettiert. Hierfür stehen verschiedene Brikettiervorrichtungen zur Verfügung.

Vor der Brikettierung wird der noch heiße dekontaminierte Abfallstoff gekühlt und eine Korngrößentrennung, beispielsweise durch Sieben, vorgenommen, wobei Abfallstoffe mit einer Korngröße von ≤ 2 mm abgesiebt und der Brikettierung zugeführt werden.

Zur Verbesserung des Brikettierprozesses kann den Abfallstoffen ein Bindemittel, beispielsweise Melasse oder ähnliches zugegeben werden.

Die Lösung des gegenständlichen Teils der Aufgabe ist in einer Anlage gemäß den Merkmalen von Patentanspruch 7 zu sehen.

Danach umfasst die Anlage zumindest ein Lager zur Aufnahme der Abfallstoffe, einen Pyrolysereaktor, insbesondere ein Pyrolysedrehrohr zur thermischen Behandlung und Dekontaminierung der schadstoffbelasteten Abfallstoffe sowie eine Kühleinrichtung und eine Brikettiervorrichtung.

Gemäß Patentanspruch 8 ist vor den Pyrolysereaktor ein Trockner angeordnet. Für die Praxis bietet sich der Einsatz eines Rohrbündeltrockners an, in dem der feuchte Gehalt der kontaminierten Abfallstoffe auf 10 bis 15 Gewichtsprozent (Gew.-%) reduziert wird.

Vor der Brikettiervorrichtung ist zweckmäßigerweise eine Siebeinrichtung angeordnet (Patentanspruch 9). Hier wird Grobkorn von einer Korngröße ≥ 2 mm aus den dekontaminierten Abfallstoffen entfernt. Vorzugsweise erfolgt eine Absiebung von Grobkorn mit einer Korngröße von oberhalb 1 mm, so dass das darunterliegende Feinkorn der Brikettierung zugeführt wird. Die Brikettierung erfolgt üblicherweise unter Zugabe eines Bindemittels bei etwa 90 °C.

Das nach der pyrolytischen Behandlung und Brikettierung erhaltene Produkt ist von Schadstoffen befreit bzw. liegt in der Schadstoffbelastung unterhalb der gesetzlich vorgeschriebenen Grenzwerte. Es stellt ein Wertprodukt dar, welches sehr gut lager- und handhabbar ist. Die Briketts können mit unterschiedlichen Transport- und Fördermitteln bewegt werden. Zweckmäßigerweise kommt es in der Stahl-, Hütten- und Zementindustrie zur Weiterverwendung.

Die Erfindung ist nachfolgend anhand der beigefügten Abbildungen näher beschrieben. Es zeigen:
- Abbildung 1: ein technisch vereinfachtes Verfahrensfließbild und der Anlagenkomponenten und
- Abbildung 2: ein Verfahrensfließbild mit der Darstellung der Anlagenkomponenten und der Verfahrensschritte zur thermischen Entölung von ölhaltigen Metallabfällen und Walzenzunder.

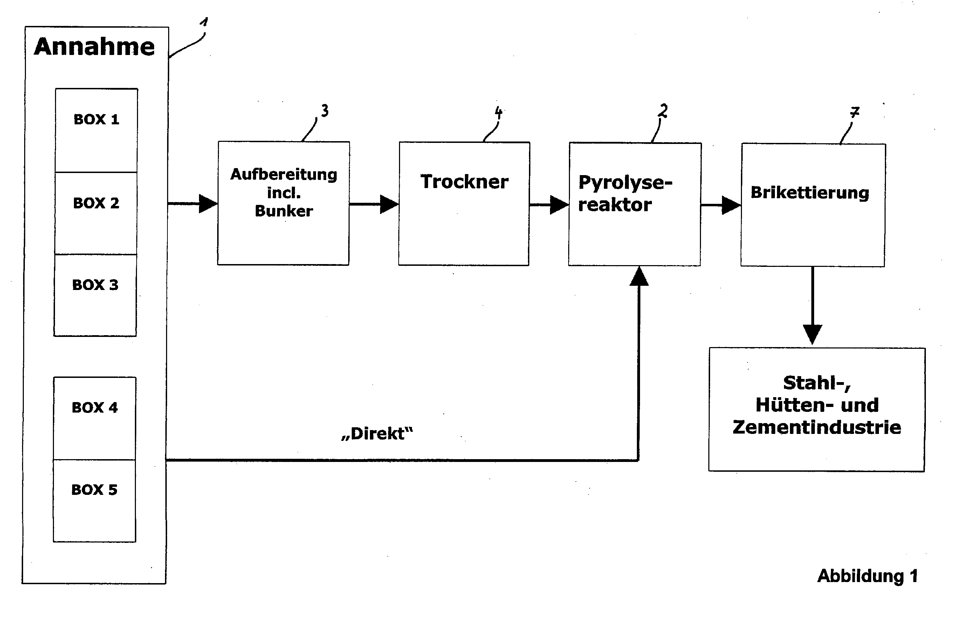

Abbildung 1 zeigt ein vereinfachtes Fließbild des erfindungsgemäßen Verfahrens und der wesentlichen Anlagenkomponenten zur Aufbereitung von eisenhaltigen ölkontaminierten Abfallstoffen.

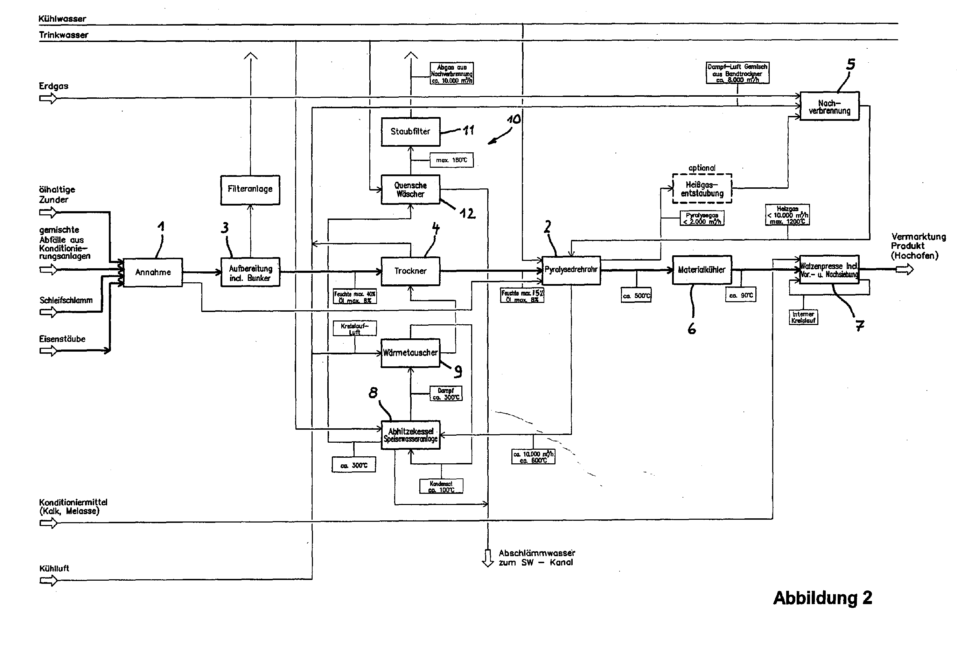

Die der Abbildung 2 zu entnehmenden Angaben, Anlagenkomponenten, Verfahrensschritte und Verfahrensparameter, wie Temperatur oder Wassergehalt, sind erfindungswesentlich im Sinne einer für die Praxis besonders vorteilhaften Ausführungsform und werden zum Gegenstand der Beschreibung gemacht.

Verschiedenartige eisenhaltige und ölkontaminierte Abfallstoffe werden zur Anlage geliefert und in einer Annahme 1 in hierfür vorgesehenen Lagerboxen (Box 1 bis Box 5) zwischengelagert.

Gemäß Abbildung 2 kann es sich bei den Abfallstoffen um ölhaltigen Zunder, gemischte Abfälle aus Konditionierungsanlagen, Schleifschlamm und Eisenstäube handeln. Alle diese Abfallsstoffe gelangen zur Annahme 1 und werden dort separat gelagert oder einer Vorbehandlung unterzogen, beispielsweise gemischt.

Je nach Konsistenz, Öl- und Feuchtegehalt können die Abfallstoffe unvorbehandelt direkt aus den Boxen 4 und 5 der Pyrolyse-Behandlung zugeführt werden. Dies ist durch den Pfad "Direkt" aus den Boxen 4 und 5 zum Pyrolysereaktor 2 verdeutlicht. In der Praxis können solche Abfallstoffe mit Feuchtigkeitsgehalten unter 40 % und Ölgehalten unterhalb von 8 % unvorbehandelt, ohne Trocknung in den Pyrolysereaktor 2 geschleust werden.

Zur Einstellung des Feuchtigkeits- und Ölgehalts kann eine Homogenisierung und Mischung der verschiedenen Abfallstoffe erfolgen. Hierzu ist eine Mischanlage 3 vorgesehen. Diese ist in Abbildung 1 mit "Aufbereitung inklusive Bunker" beschriftet. Gegebenenfalls kann den kontaminierten Abfallstoffen auch ein Granulierungshilfsmittel wie Silicagel oder Bentonit zugegeben werden.

Der Mischanlage 3 werden die Abfallstoffe aus den Boxen 1, 2 und 3 zugeführt. Nach dem Verlassen der Mischanlage 3 weisen die Abfallstoffe noch einen Feuchtigkeitsgehalt von maximal 40 % und einen Ölgehalt von maximal 8 % auf. Sie werden dann einem Trockner 4 zugeführt. Vorzugsweise kommt ein Rohrbündeltrockner zum Einsatz. Nach dem Verlassen des Trockners 4 liegt der Feuchtigkeitsgehalt der Abfallstoffe noch zwischen 10 % und 15 %.

Die Abfallstoffe werden dann in den Pyrolysereaktor 2 eingeschleust. Gegebenenfalls kann noch eine Inertisierung der Abfallstoffe mit einem Inertgas erfolgen, bevor dieser der Pyrolyse-Behandlung zugeführt wird. Als Pyrolysereaktor 2 kommt in der Praxis bevorzugt ein Pyrolysedrehrohr zur Anwendung. Hier erfolgt eine thermische Spaltung der chemischen Verbindungen in Abwesenheit von Sauerstoff bzw. unter Sauerstoffmangel. In dem Pyrolysedrehrohr 2 werden die Abfallstoffe mittels indirekter Beheizung auf Temperaturen zwischen 450 °C und 550 °C, vorzugsweise ca. 470 °C, aufgeheizt. Dabei wird das mit eingetragene Wasser und die organischen Bestandteile, hauptsächlich Walzöl, verdampft und als Pyrolysegas abgesaugt. Die Beheizung erfolgt über einen außenliegenden Heizmantel, wobei die Heizenergie mittels Strahlungswärme auf das Pyrolysegut übertragen wird. Als Energieträger kann das Abgas aus einer Nachbrennkammer 5 eingesetzt werden. Hierbei sind die Abgastemperaturen durch zwei Faktoren begrenzt. Die untere Grenztemperatur liegt bei 850 °C. Dieser Wert ergibt sich aus genehmigungsrechtlichen Vorschriften und entsprechen den emissionsrechtlichen Auflagen. Die obere Grenztemperatur wird bei ca. 1.200 °C angesehen. Diese ergibt sich aus der zulässigen Temperaturbelastung des Pyrolysedrehrohrs 2.

Nach der Pyrolyse-Behandlung wird der dann dekontaminierte und etwa 500 °C heiße Abfallstoff in einer Kühleinrichtung 6 abgekühlt. Bei der Kühleinrichtung 6 kann es sich um eine direkte oder indirekte Kühlung handeln. Die indirekte Kühlung sieht beispielsweise einen Transport der dekontaminierten Abfallstoffe über eine Kühlstrecke vor.

Nach Abkühlung auf ca. 90 °C erfolgt die Brikettierung in einer Brikettiervorrichtung 7, vorzugsweise einer Walzenpresse. Hier werden die Abfallstoffe unter Druckeinwirkung zu Briketts mit vorgegebenem Durchmesser von 10 mm geformt. Zur Unterstützung der Brikettierung kann den Abfallstoffen ein Bindemittel zugegeben werden.

Das so erhaltene Wertprodukt ist vorteilhaft hinsichtlich Lagerung und Weitertransport. Es kommt bevorzugt zum Einsatz in der Stahl-, Hütten- und Zementindustrie.

Der Energiebedarf für die Beheizung des Pyrolysedrehrohrs 2 liegt bei ca. 1.300 kW. Diese Leistung entspricht etwa 40 % bis 50 % der im Abgas enthaltenen Energie, so dass das Abgas bei einer Eintrittstemperatur von maximal 1.200 °C den Heizmantel des Pyrolysedrehrohrs 2 mit einer Temperatur zwischen 650 °C und 750 °C wieder verlässt, also mit einer Energie, die für eine weitere Wärmenutzung zur Verfügung steht. Für diese ergänzende Wärmenutzung ist ein Abhitzekessel 8 vorgesehen, in dem Sattdampf mit ca. 6 bar Druck erzeugt wird. Dieser Sattdampf kann als Wärmeträger für die Beheizung des Trockners 4 genutzt werden. Zum Wärmeaustausch ist ein Wärmetauscher 9 vorgesehen. Der Abhitzekessel 8 ist mit einer Abgasbypass-Klappe ausgerüstet, so dass ein Teil des Abgases aus dem Pyrolysedrehrohr 2 am Abhitzekessel 8 vorbei geführt werden kann. Damit ist es möglich, die Leistung des Abhitzekessels 8 dem Energiebedarf des Trockners 4 anzupassen unabhängig von dem Energieüberschuss aus der Beheizung des Pyrolysedrehrohrs 2.

Nach der Abwärmenutzung verlässt das Abgas mit maximal 300 °C den Abhitzekessel 8 und wird in einer nachgeschalteten Rauchgasreinigung 10 entsprechend dem emissionsrechtlichen Auflagen gereinigt. Dies kann rationell und wirtschaftlich mittels eines Staubfilters 11, vorzugsweise eines Gewebefilters erfolgen, in dem das Abgas auf einen Staubgehalt < 10 mg/m³ gereinigt wird. Der anfallende Filterstaub kann wieder in den Prozess zurückgeführt werden, beispielsweise in eine der Boxen 1-5 oder direkt zur Mischanlage 3.

Um die Abgastemperatur beim Eintritt in die Rauchgasreinigung konstant zu halten, kann ein Kühler 12 vorgesehen sein, beispielsweise ein Einspritzkühler, in dem mittels aufbereitetem Speisewasser die Temperatur vor Eintritt in die Rauchgasreinigung 10 geregelt wird. Das gereinigte Abgas wird anschließend mit einer Temperatur von ca. 160 °C über eine Kaminanlage entsorgt.

### Bezugszeichenaufstellung

- 1 -: Annahme
- 2 -: Pyrolysereaktor
- 3 -: Mischanlage
- 4 -: Trockner
- 5 -: Nachbrennkammer
- 6 -: Kühleinrichtung
- 7 -: Brikettiervorrichtung
- 8 -: Abhitzekessel
- 9 -: Wärmetauscher
- 10 -: Rauchgasreinigung
- 11 -: Staubfilter
- 12 -: Kühler

## Patentansprüche

1. Verfahren zur Verarbeitung von eisenhaltigen, ölkontaminierten Abfallstoffen, insbesondere Walzenzunder und ähnlichen industriellen Abfallstoffen, wobei die Abfallstoffe durch eine Pyrolyse-Behandlung dekontaminiert und organische Bestandteile, entfernt sowie und die dekontaminierten Abfallstoffe anschließend brikettiert werden.

2. Verfahren nach Anspruch 1, **dadurch gekennzeichnet, dass** die Pyrolyse-Behandlung unter Luftabschluss und indirekter Beheizung der Abfallstoffe mit einer Temperatur Tp zwischen 450 °C und 550 °C erfolgt.

3. Verfahren nach Anspruch 1 oder 2, **dadurch gekennzeichnet, dass** die Abfallstoffe vor der Pyrolyse-Behandlung homogenisiert werden.

4. Verfahren nach einem der Ansprüche 1 bis 3,, **dadurch gekennzeichnet, dass** der Feuchtigkeitsgehalt der Abfallstoffe vor der Pyrolyse-Behandlung reduziert wird.

5. Verfahren nach einem der Ansprüche 1 bis 4, **dadurch gekennzeichnet, dass** eine Korngrößentrennung der dekontaminierten Abfallstoffe vorgenommen wird und Abfallstoffe mit einer Korngröße von kleiner oder gleich 2 mm der Brikettierung zugeführt werden.

6. Verfahren nach einem der Ansprüche 1 bis 5, **dadurch gekennzeichnet, dass** den dekontaminierten Abfallstoffen vor der Brikettierung ein Bindemittel zugegeben wird.

7. Anlage zur Verarbeitung von eisenhaltigen, ölkontaminierten Abfallstoffen, insbesondere Walzenzunder und ähnlichen industriellen Abfallstoffen, welche ein Lager (1) zur Aufnahme der Abfallstoffe, einen Pyrolysereaktor (2), eine Kühleinrichtung (6) und eine Brikettiervorrichtung (7) umfasst.

8. Anlage nach Anspruch 7, wobei vor dem Pyrolysereaktor (2) ein Trockner (4) angeordnet ist.

9. Anlage nach Anspruch 7 oder 8, wobei vor der Brikettiervorrichtung (7) eine Siebeinrichtung angeordnet ist.
